(19) Europäisches Patentamt
European Patent Office
Office européen des brevets

(11) **EP 1 806 226 B1**

(12) **EUROPÄISCHE PATENTSCHRIFT**

(45) Veröffentlichungstag und Bekanntmachung des Hinweises auf die Patenterteilung:
**21.10.2009  Patentblatt 2009/43**

(51) Int Cl.:
**B32B 27/36** *(2006.01)*    **B32B 27/20** *(2006.01)*
**B65D 77/20** *(2006.01)*    B65B 7/28 *(2006.01)*
C08K 3/22 *(2006.01)*    C08K 3/36 *(2006.01)*

(21) Anmeldenummer: **06024870.5**

(22) Anmeldetag: **01.12.2006**

(54) **Weisse, siegelfähige, biaxial orientierte Polyesterfolie**

White, heat-sealable, biaxially oriented polyester film

Feuille de polyester blanche, thermosoudable, biaxialement étirée

(84) Benannte Vertragsstaaten:
**DE FR GB LU**

(30) Priorität: **09.12.2005  DE 102005058908**

(43) Veröffentlichungstag der Anmeldung:
**11.07.2007  Patentblatt 2007/28**

(73) Patentinhaber: **Mitsubishi Polyester Film GmbH**
**65203 Wiesbaden (DE)**

(72) Erfinder:
• **Konrad, Matthias**
**65719 Hofheim (DE)**
• **Peiffer, Herbert**
**55126 Mainz (DE)**
• **Kiehne, Thorsten**
**Nagahama**
**Shiga, 526-0031 (JP)**
• **Jesberger, Martin**
**55122 Mainz (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A- 1 380 414**        **EP-A1- 1 529 636**
**DE-A1- 10 002 150**      **JP-A- 2000 062 121**

EP 1 806 226 B1

**Beschreibung**

Die Erfindung betrifft eine weiße, siegelfähige, biaxial orientierte Polyesterfolie, umfassend eine Basisschicht B, eine siegelfähige Deckschicht A und eine nicht siegelnde Deckschicht C. Die Erfindung betrifft weiterhin ein Verfahren zur Herstellung der Folie und ihre Verwendung.

Weiße, siegelfähige, biaxial orientierte Polyesterfolien nach dem Stand der Technik sind bekannt.

In der US-B-6,720,065 wird ein Laminat für Haushaltsgeräte beschrieben, das eine gefärbte Polyesterfolie enthalten kann, die aus drei Schichten besteht. Das Laminat ist durch einen hohen Glanz der sichtbaren Oberfläche gekennzeichnet, der höher als 80 sein soll. Die Basisschicht der Polyesterfolie ist mit weißfärbenden Pigmenten oder mit Ruß gefüllt, die eine Deckschicht ist klar und die andere Deckschicht siegelfähig. Die klare Deckschicht kann ebenfalls Pigmente wie z. B. Silika, Aluminiumoxid oder Titandioxid enthalten. Die siegelfähige Deckschicht kann als Siegelrohstoff z. B. einen Polyester enthalten, der aus Isophthalat- und Terephthalateinheiten aufgebaut ist. In der Schrift wird offengelassen, in welcher Konzentration und in welcher Größe die Pigmente in der klaren Deckschicht vorliegen und ob die siegelfähige Deckschicht Additive enthält oder nicht. Die Folie ist verbesserungswürdig bezüglich der Siegeleigenschaften und des Wickelverhaltens.

In der EP-B-0 862 514 wird eine opake Polyesterfolie beschrieben, die sich durch eine verringerte Abrasionsneigung gegenüber schmelzeführenden Teilen (Dorn, Düse) auszeichnet.
Die Polyesterfolie besteht aus drei Schichten, wobei die Basisschicht der Folie opak ist, die eine Deckschicht klar und die andere Deckschicht siegelfähig ist. Die Basisschicht ist z. B. mit weißfärbenden Pigmenten wie $TiO_2$ oder $BaSO_4$ gefüllt. Die klare Deckschicht kann ebenfalls Pigmente enthalten, ihre Konzentration muss aber kleiner als 0,5 Gew.-% sein. Sie ist bevorzugt ungefüllt. Die andere, siegelfähige Deckschicht kann als Siegelrohstoff z. B. Polyester enthalten, die aus Isophthalat- und Terephthalateinheiten aufgebaut sind. Es wird offengelassen, ob die siegelfähige Deckschicht Additive, wie die andere transparente Deckschicht, enthält. Das Wickelverhalten der Folie ist verbesserungsbedürftig.

In der EP-A-0 515 096 wird eine coextrudierte, mehrschichtige, siegelfähige Polyesterfolie beschrieben, die auf der siegelfähigen Schicht ein zusätzliches Additiv enthält. Die Polyesterfolie kann sowohl transparent als auch weiß/opak sein. Im letzteren Fall enthält die Basisschicht Vakuolen initiierende Additive, wobei Bariumsulfat als besonders bevorzugt angegeben wird. Das Additiv auf der siegelfähigen Schicht kann z. B. anorganische Partikel enthalten und wird vorzugsweise als wässrige Schicht auf die Folie bei deren Herstellung aufgetragen. Hierdurch werden die guten Siegeleigenschaften beibehalten, und die Folie ist gut zu verarbeiten. Die Rückseite der Folie enthält nur sehr wenige Partikel, die hauptsächlich über das Regranulat in diese Schicht gelangen. Die Folie ist verbesserungswürdig bezüglich des Wickelverhaltens.

In der EP-A-1 186 406 wird eine zweischichtige weiße, siegelfähige Polyesterfolie beschrieben, die sich durch eine verbesserte Hitzestabilität auszeichnet, wenn sie gegen ein Metallblech gesiegelt worden ist. Die Basisschicht A sowie die siegelfähige Deckschicht B können z. B. mit weißfärbenden Pigmenten wie $TiO_2$ eingefärbt sein. Die Folie ist nicht optimal im Siegelverhalten.

EP-A-1471096, EP-A-1 471 097, EP-A-1475 228, EP-A-1 475 229, EP-A-1471 094 und EP-A-1471098 beschreiben heißsiegelbare und gegenüber APET/CPET peelfähige Polyesterfolien mit ABC-Aufbau, die zur Einstellung der gewünschten Peeleigenschaften in der peelfähigen und heißsiegelbaren Decksicht A entweder ca. 2 bis 10 Gew.-% anorganische oder organische Partikel oder aber ein polyesterunverträgliches Polymer wie z. B. ein Norbornen/Ethylen-Copolymeres enthalten. Die Haftung der Folien gegen sich selbst und zu Stahl ist nicht ausreichend.

Aufgabe der vorliegenden Erfindung war es, eine weiße, siegelfähige, biaxial orientierte Polyesterfolie bereitzustellen, die die Nachteile der Folien nach dem Stand der Technik nicht aufweist und sich insbesondere durch

- eine verbesserte Siegelfähigkeit gegenüber sich selbst, gegenüber Substraten aus APET, A/CPET, CPET oder Metallen,
- eine verbesserte Wickelbarkeit,
- verbessertes Verarbeitungsverhalten und
- durch verbesserte optische Eigenschaften (Weißgrad, Glanz) auszeichnet.

(APET = amorphes Polyethylenterephthalat (PET); CPET = kristallines PET; A/CPET= zweischichtiges Laminat, innen APET, außen CPET (bei einer Schale))

Ein besonderes Anliegen der vorliegenden Erfindung war es, die Siegelung der Folie gegenüber anderen (nicht siegelfähigen) Polyesterfolien oder Trays (Menüschalen) aus Polyester sowie gegenüber metallischen Substraten zu verbessern. Dies bedeutet eine Mindestsiegeltemperatur der Deckschicht A gegenüber sich selbst von <110 °C, bevorzugt <108 °C und besonders bevorzugt < 106 °C, und eine Siegelnahtfestigkeit dieser Deckschicht A gegenüber sich selbst von 1,5 bis 10 N/15 mm, bevorzugt von 1,6 bis 10 N/15 mm und besonders bevorzugt von 1,7 bis 10 N/15 mm. Gegen ein APET-Substrat soll die Mindestsiegeltemperatur der Deckschicht A <140 °C, bevorzugt <139 °C und besonders bevorzugt <138 °C, betragen und die Siegelnahtfestigkeit dieser Deckschicht A gegenüber einem A/CPET-Substrat 1,5 bis 10 N/15 mm, bevorzugt von 1,6 bis 10 N/15 mm und besonders bevorzugt von 1,7 bis 10 N/15 mm, betragen. Außerdem soll dafür Sorge getragen werden, dass die Folie gut wickelbar ist und auf schnelllaufenden Maschinen verarbeitet werden kann. Sie sollte sich zudem durch sehr gute optische Eigenschaften auszeichnen, insbesondere was den Weißgrad der Folie und den Glanz der beiden Deckschichten betrifft. Bei der Herstellung der Folie sollte zudem gewährleistet sein, dass anfallendes Verschnittmaterial als Regenerat in einer Menge von bevorzugt bis zu 60 Gew.-%, bezogen auf das Gesamtgewicht der Folie, wieder dem Herstellprozess zurückgeführt werden kann, ohne dass dabei die physikalischen und optischen Eigenschaften der Folie negativ beeinflusst werden.

Eine Deckschicht ist dann nicht siegelfähige, wenn ihre Siegelanspringtemperatur auch Mindestsiegeltemperatur genannt größer als 125 °C (gegen sich selbst) ist.

Die Aufgabe wird erfindungsgemäß durch die Bereitstellung einer weißen, biaxial orientierten, siegelfähigen Polyesterfolie mit einer Basisschicht B, einer siegelfähigen Deckschicht A und einer Deckschicht C gelöst, wobei

a) die Basisschicht B zumindest ein weißfärbendes Pigment bevorzugt in einer Konzentration von 6 bis 20 Gew.-% enthält (bezogen auf das Gesamtgewicht der Schicht B),

b) die Deckschicht C zumindest ein weißfärbendes Pigment bevorzugt in einer Konzentration von 1 bis 15 Gew.-% enthält und optional ein Pigment enthält, das durch folgende Merkmale gekennzeichnet ist:

- der mittlere Durchmesser der Partikel ($d_{50}$-Wert) liegt im Bereich von 2 bis 5 $\mu$m,
- die Streuung des Partikeldurchmessers (SPAN 98) liegt im Bereich von 1,2 bis 2 und
- die Konzentration der Partikel liegt im Bereich von 0,05 bis 1,5 Gew.-% (bezogen auf das Gesamtgewicht der Schicht C), und

c) die siegelfähige Deckschicht A weniger als 0,01 Gew.-% (bezogen auf das Gesamtgewicht der Schicht A) externe Partikel enthält.

Pigmente bedeuten auch Antiblockmittel, Füller, externe oder inerte Partikel genannt, und werden durch die genannten Parameter charakterisiert. Typische Pigmente sind anorganische und/oder organische Partikel, beispielsweise Calciumcarbonat, amorphe Kieselsäure, Talk, Magnesiumcarbonat, Bariumcarbonat, Calciumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Kaolin oder vernetzte Polystyrol- oder Arcrylat-Partikel.

Erfindungsgemäß ist die weiße Polyesterfolie dreischichtig aufgebaut und umfasst die Basisschicht B, die siegelfähige Deckschicht A und die nicht siegelfähige Deckschicht C (A-B-C-Aufbau).

Erfindungsgemäß enthält die Basisschicht B zumindest ein weißfärbendes Pigment bevorzugt in einer Konzentration von 6 bis 20 Gew.-%. Die Konzentration wird dabei erfindungsgemäß so gewählt, dass der Weißgrad der Folie (nach Berger) größer als 70 % ist. Im anderen Fall ist die Folie für die bevorzugten Anwendungen (z. B. gesiegelte Deckelfolie auf PET-Menüschalen, Siegelung auf metallischen Blechen) von den optischen Eigenschaften her weniger geeignet, da sie zu durchscheinend ist.

Erfindungsgemäß enthält auch die Deckschicht C zumindest ein weißfärbendes Pigment in einer Konzentration von bevorzugt 1 bis 15 Gew.-%. Es hat sich dabei als zweckmäßig erwiesen, die Konzentration des weißfärbenden Pigmentes in der Deckschicht C kleiner als in der Basisschicht B zu wählen. Die optischen Eigenschaften der Folie (Glanz der Deckschicht C) sind dann besonders gut. Die Konzentration wird dabei erfindungsgemäß so gewählt, dass der Weißgrad der Folie (nach Berger) größer als 70 % ist. Im anderen Fall ist die Folie für die bevorzugten Anwendungen (z. B. gesiegelte Deckelfolie auf PET-Menüschalen, Siegelung auf metallischen Blechen) von den optischen Eigenschaften her weniger geeignet, da sie zu durchscheinend ist.

Es wurde gefunden, dass die Wickelbarkeit der Folie und die Rollenaufmachung weiter verbessert werden können, wenn die Deckschicht C optional ein weiteres Pigment enthält. Dabei wurde festgestellt, dass der Partikeldurchmesser $d_{50}$, die Streuung SPAN98 und die Konzentration des verwendeten Pigments in der Deckschicht C für eine gute Wickelbarkeit, für eine gute Verarbeitbarkeit und Optik der Folie von Bedeutung sind.

Zur Verbesserung der Wickelung und Verarbeitbarkeit der Folie enthält die Deckschicht C ein Pigment, bei dem der mittlere Durchmesser ($d_{50}$-Wert) im Bereich von 2,0 bis 5,0 $\mu$m, bevorzugt von 2,1 bis 4,9 $\mu$m und besonders bevorzugt von 2,2 bis 4,8 $\mu$m, und der SPAN98 im Bereich von 1,2 bis 2,0, bevorzugt von 1,25 und 1,9 und besonders bevorzugt von 1,3 und 1,8, liegt.

Enthält die Deckschicht C dagegen ein Pigment, bei dem der mittlere Durchmesser und/oder der SPAN98 außerhalb des bevorzugten Bereiches liegen, so wirkt sich dies negativ auf die Wickelung, die Verarbeitbarkeit und auf die optischen Eigenschaften der Folie aus.

Enthält die Deckschicht C ein Pigment, bei dem der mittlere Durchmesser größer als 5 $\mu$m ist, so verschlechtert sich das Filterverhalten; ist der SPAN98 größer als 2, so werden die optischen Eigenschaften und die Wickelung der Folie schlechter.

3

Enthält die Deckschicht C der Folie ein Pigment, bei dem der mittlere Durchmesser kleiner als 2 $\mu$m und/oder der SPAN98 kleiner als 1,2 ist, so wird die Wickelung der Folie schlechter, sie neigt beispielsweise zum Verblocken.

Die Deckschicht C ist zur Verbesserung des Wickelverhaltens und der Verarbeitbarkeit vergleichsweise hoch mit inertem, das heißt zugesetztem Pigment gefüllt. Die Konzentration der inerten Partikel in der Deckschicht C liegt zwischen 0,05 und 1,5 Gew.-%, in der bevorzugten Ausführungsform zwischen 0,1 und 1,1 Gew.-% und in der besonders bevorzugten Ausführungsform zwischen 0,15 und 0,7 Gew.-% und richtet sich im Wesentlichen nach den zu erzielenden optischen Eigenschaften der Folie.

Die siegelfähige Deckschicht A enthält weniger als 0,005 %, besonders bevorzugt gar keine externen Partikel. In diesem Fall ist die Siegelung gegenüber sich selbst und gegenüber den oben gelisteten Materialien ausgezeichnet. Zwischen der Siegelschicht A und dem Substrat bilden sich keine Bläschen, und die Siegelung ist vollflächig. Im anderen Fall bilden sich z. B. durch die Spitzen der Füllstoffe Hohlräume, die die Siegelung verschlechtern und zu optischen Defekten in der aufkaschierten Folie führen.

Verwendete Polymere für die Basisschicht B und für die Deckschicht C:

Basismaterial:

Die Basisschicht B der Folie besteht bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$-X-$C_6H_4$-OH, wobei X für -$CH_2$-, -C$(CH_3)_2$-, -C$(CF_3)_2$-, -O-, -S- oder -$SO_2$- steht. Daneben sind auch Bisphenole der Formel HO-$C_6H_4$-$C_6H_4$-OH gut geeignet.

Andere aromatische Dicarbonsäuren sind bevorzugt Benzoldicarbonsäuren, Naphtalindicarbonsäuren, beispielsweise Naphthalin-1,4- oder 1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$)-Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus. Erfindungsgemäße Polyester sind als Handelsprodukte erhältlich.

Zur Erzielung der vorgenannten Eigenschaften, insbesondere des gewünschten Weißgrades der Folie, werden in die Basisschicht B und in die Deckschicht C die notwendigen weißfärbenden Pigmente, auch Weißpigmente genannt, eingearbeitet. In Frage kommen Titandioxid, Bariumsulfat, Zinksulfid oder Zinkoxid. Bevorzugt wird $TiO_2$ als alleiniges Weißpigment verwendet. Es wird zweckmäßigerweise als Extrusionsmasterbatch (die Titandioxid-Konzentration ist hier deutlich höher als in der biaxial orientierten Folie) dem Originalrohstoff zugegeben. Typische Werte für die $TiO_2$-Konzentration im Extrusionsmasterbatch sind z. B. 50 Gew.-% Titandioxid. Das Titandioxid kann sowohl vom Rutil-Typ als auch vom Anatas-Typ sein bzw. aus Mischungen daraus bestehen. Vorzugsweise wird Titandioxid vom Rutil-Typ verwendet. Die Korngröße des Titandioxids liegt in der Regel zwischen 0,05 und 0,5 $\mu$m, bevorzugt zwischen 0,1 und 0,3 $\mu$m. Die Folie erhält durch die eingearbeiteten Pigmente ein brillantes weißes Aussehen. Um zu dem gewünschten Weißgrad (bevorzugt > 70) und zu der gewünschten niedrigen Transparenz (bevorzugt < 50 %) zu gelangen, sollte die Basisschicht B hochgefüllt sein. Die Partikelkonzentration zur Erzielung der gewünschten niedrigen Transparenz liegt bei über 6 Gew.-% in der Basisschicht, jedoch unterhalb von 20 Gew.-%, vorzugsweise über 7 Gew.-%, jedoch unterhalb 18 Gew.-% und ganz besonders bevorzugt oberhalb 8 Gew.-%, jedoch unterhalb 16 Gew.-%, bezogen auf das Gesamtgewicht der Basisschicht B.

Zu einer weiteren Steigerung des Weißgrades können geeignete optische Aufheller der Basisschicht und/oder den anderen Schichten zugesetzt werden. Geeignete optische Aufheller sind beispielsweise Hostalux® KS (ein Benzoxazol-Derivat) oder Eastobrite®OB-1 (2,2-(4,4-Diphenolvinyl)dibenzoxazol).

Es wurde gefunden, dass bei der bevorzugten Verwendung von im wesentlichen $TiO_2$ als einfärbendem Pigment die Folie weniger anfällig gegenüber Einreißen und Delaminierung wird. Die Zugabe des $TiO_2$ bevorzugt über die Masterbatchtechnologie hat den Vorteil, dass Farbunterschiede z. B. durch nicht konstante Regenerateigenschaften leicht korrigiert werden können.

Siegelfähige Deckschicht A:

Die bevorzugt durch Coextrusion auf die Basisschicht B aufgebrachte siegelfähige Deckschicht A besteht bevorzugt im wesentlichen aus Copolyestern, die überwiegend aus Isophthal- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren wie sie auch in der Basisschicht vorkommen können. Die bevorzugten Copolyester, die die gewünschten Siegeleigenschaften bereitstellen, sind solche, die aus Etylenterephthalat- und Ethylenisophthalat-Einheiten aufgebaut sind. Der Anteil an Ethylenterephthalat beträgt bevorzugt 60 bis 95 Mol-% und der entsprechende Anteil an Ethylenisophthalat 40 bis 5 Mol-%. Bevorzugt sind weiterhin Copolyester, bei denen der Anteil an Ethylenterephthalat 65 bis 90 Mol-% und der entsprechende Anteil an Ethylenisophthalat 35 bis 10 Mol-% beträgt, und ganz bevorzugt sind Copolyester, bei denen der Anteil an Ethylenterephthalat 70 bis 85 Mol-% und der entsprechende Anteil an Ethylenisophthalat 30 bis 15 Mol-% beträgt.

Nicht siegelfähige Deckschicht C:

Für die andere, nicht siegelfähige Deckschicht C können prinzipiell die gleichen Polymeren verwendet werden wie sie zuvor für die Basisschicht B beschrieben wurden. Bei Verwendung von $TiO_2$ als alleinigem Pigment in dieser Schicht wird die Folie besonders glatt und damit glänzender.

Siegeleigenschaften der siegelfähigen Deckschicht A:

Die gewünschten Siegeleigenschaften der Deckschicht A werden vermutlich aus der Kombination der chemischen Zusammensetzung des verwendeten Copolyesters, der Deckschichtdicke und der Topographie (glatte Oberfläche) erhalten

Die siegelfähige Deckschicht A hat gegenüber sich selbst eine Siegelanspringtemperatur von weniger als 110 °C und eine Siegelnahtfestigkeit (diese wird bei 23 °C gemessen) von mindestens 1,5 N/15 mm Folienbreite, gegenüber einem Substrat aus APET eine Siegelanspringtemperatur von kleiner 140 °C und eine Siegelnahtfestigkeit von mindestens 1,5 N/15 mm Folienbreite. Die besten Siegeleigenschaften der Folie erhält man, wenn dem Copolyester keine weiteren Additive, insbesondere keine anorganischen oder organischen externen Partikel, zugegeben werden. Für diesen Fall erhält man bei vorgegebenem Copolyester und vorgegebener Schichtdicke die niedrigste Siegelanspringtemperatur und die höchste Siegelnahtfestigkeit.

Die Basisschicht B kann zusätzlich übliche Additive wie beispielsweise Stabilisatoren enthalten. Die andere Schicht C kann zusätzlich übliche Additive enthalten wie beispielsweise Stabilisatoren. Diese Additive werden zweckmäßig dem Polymer bzw. der Polymermischung bereits vor dem Aufschmelzen zugesetzt. Als Stabilisatoren werden vorteilhaft beispielsweise Phosphorverbindungen wie Phosphorsäureester eingesetzt.

Bei der Folie ist die Dicke der Deckschicht C im Allgemeinen größer als 0,4 μm und liegt üblicherweise im Bereich von 0,5 bis 10,0 μm, bevorzugt im Bereich von 0,8 bis 9 μm und besonders bevorzugt im Bereich von 1,0 bis 8,0 μm.

Bei der Folie ist die Dicke der Deckschicht A im Allgemeinen größer als 0,4 μm und liegt bevorzugt im Bereich von 0,8 bis 9,0 μm und besonders bevorzugt im Bereich von 1,0 bis 8,0 μm.

Die Gesamtdicke der erfindungsgemäßen Polyesterfolie kann innerhalb weiter Grenzen variieren. Sie beträgt bevorzugt 10 bis 100 μm, insbesondere 11 bis 90 μm, vorzugsweise 12 bis 80 μm, wobei die Schicht B einen Anteil von vorzugsweise 5 bis 90 % an der Gesamtdicke hat.

Herstellungsverfahren

Die Erfindung betrifft auch ein Verfahren zur Herstellung der erfindungsgemäßen Polyesterfolie nach dem an sich aus der Literatur bekannten Coextrusionsverfahren.

Im Rahmen dieses Verfahrens wird so vorgegangen, dass die den einzelnen Schichten A, B und C der Folie entsprechenden Schmelzen durch eine Flachdüse coextrudiert werden, die so erhaltene Folie zur Verfestigung auf einer oder mehreren Walzen abgezogen wird, die Folie anschließend biaxial gestreckt, die biaxial gestreckte Folie thermofixiert und gegebenenfalls an der zur Behandlung vorgesehenen Oberflächenschicht coronabehandelt wird.

Die biaxiale Streckung (Orientierung) wird im Allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst werden wie beim Coextrusionsverfahren üblich das Polymere bzw. die Polymermischungen für die einzelnen Schichten in einem Extruder komprimiert und verflüssigt, wobei die gegebenenfalls als Zusätze vorgesehenen Additive bereits im Polymer bzw. in der Polymermischung enthalten sein können. Die Schmelzen werden dann gleichzeitig durch eine Flachdüse (Breitschlitzdüse) gepresst, und die ausgepresste mehrschichtige Schmelze wird auf einer oder mehreren Abzugswalzen abgezogen, wobei die Schmelze abkühlt und sich zu einer Vorfolie verfestigt.

Die biaxiale Verstreckung wird im Allgemeinen sequenziell durchgeführt. Dabei wird die Vorfolie vorzugsweise zuerst in Längsrichtung (d. h. in Maschinenrichtung = MD-Richtung) und anschließend in Querrichtung (d. h. senkrecht zur Maschinenrichtung = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im Allgemeinen wird die Längsstreckung bei einer Temperatur im Bereich von 80 bis 130 °C und die Querstreckung im Bereich von 90 bis 150 °C durchgeführt. Das Längsstreckverhältnis liegt allgemein im Bereich von 2,5:1 bis 6:1, bevorzugt von 3,0:1 bis 5,5:1. Das Querstreckverhältnis liegt allgemein im Bereich von 3,0:1 bis 5,0:1, bevorzugt von 3,5:1 bis 4,5:1. Vor der Querstreckung kann man eine oder beide Oberflächen der Folie nach den bekannten Verfahren in-line beschichten. Die In-line-Beschichtung kann beispielsweise zu einer verbesserten Haftung einer Metallschicht oder einer eventuell später aufzubringenden Druckfarbe, aber auch zur Verbesserung des antistatischen Verhaltens oder des Verarbeitungsverhaltens dienen.

Bei der nachfolgenden Thermofixierung wird die Folie über eine Zeitdauer von etwa 0,1 bis 10 s bei einer Temperatur von ca. 150 bis 250 °C gehalten. Anschließend wird die Folie in üblicher Weise aufgewickelt.

Bevorzugt wird nach der biaxialen Streckung die nicht siegelnde Seite der Folie nach einer der bekannten Methoden corona- oder flammbehandelt. Die Behandlungsintensität liegt im Allgemeinen im Bereich von über 50 mN/m.

Vorteile der Erfindung

Die erfindungsgemäße Folie zeichnet sich durch eine hervorragende Siegelfähigkeit, eine sehr gute Wickelung, ein sehr gutes Verarbeitungsverhalten und durch eine sehr gute Optik aus. Die siegelfähige Deckschicht A siegelt gegen sich selbst, gegen die nicht siegelfähige Deckschicht C und gegen Substrate aus APET, A/CPET , CPET oder Metalle (Stahl, lackierter Stahl, verchromter oder verzinnter Stahl), und die Folie ist damit in vielen Bereichen einsetzbar wie z. B. als Deckelfolie für (Menü)-Schalen, Beutel oder als Deckschicht auf Blechen.

Der Glanz und der Weißgrad der Folie konnten deutlich verbessert werden. Daneben ist bei der Herstellung der Folie gewährleistet, dass das Verschnittmaterial (Regenerat) in einer Menge im Bereich von ca. 20 bis 60 Gew.-%, bezogen auf das Gesamtgewicht der Folie, wieder der Extrusion zugeführt werden kann, ohne dass dabei die physikalischen und optischen Eigenschaften der Folie nennenswert negativ beeinflusst werden, insbesondere nicht ihr optisches Erscheinungsbild.

Die nachstehende Tabelle (Tabelle 1) fasst die wichtigsten erfindungsgemäßen Folieneigenschaften noch einmal zusammen.

**Tabelle 1**

| | Erfindungsgemäßer Bereich | Bevorzugt | Besonders bevorzugt | Einheit | Messmethode |
|---|---|---|---|---|---|
| **Basisschicht B** | | | | | |
| Konzentration an weißfärbendem Pigment | 6 bis 20 | 7 bis 18 | 8 bis 16 | Gew.-% | intern |

(fortgesetzt)

| Deckschicht C | | | | | |
|---|---|---|---|---|---|
| Konzentration an weißfärbendem Pigment | 1 bis 15 | 4 bis 14 | 6 bis 13 | Gew.-% | intern |
| Pigmentkonzentration | 0,05 bis 1,5 | 0,1 bis 1,1 | 0,15 bis 0,7 | Gew.-% | intern |
| Partikeldurchmesser $d_{50}$ des Pigments | 2,0 bis 5 | 2,1 bis 4,9 | 2,2 bis 4,8 | $\mu m$ | intern |
| SPAN 98 des Pigments | 1,2 bis 2,0 | 1,25 bis 1,9 | 1,3 bis 1,8 | | |
| Dicke der Deckschicht C | 0,5 bis 10 | 0,8 bis 9 | 1,0 bis 8 | $\mu m$ | |
| **Deckschicht A** | | | | | |
| Konzentration an externen Partikeln | $\leq 0,01$ | $\leq 0,005$ | keine | Gew.-% | intern |
| Dicke der Deckschicht A | 0,5 bis 10 | 0,8 bis 9 | 1,0 bis 8 | $\mu m$ | |
| **Eigenschaften der Folie** | | | | | |
| Dicke der Folie | 10 bis 100 | 11 bis 90 | 12 bis 80 | $\mu m$ | |
| Mindestsiegeltemperatur von Deckschicht A gegenüber sich selbst (= FIN) | < 110 | < 108 | < 106 | °C | intern |
| Siegelnahtfestigkeit von Deckschicht A gegenüber sich selbst (bei 130 °C) | 1,5 bis 10 | 1,6 bis 10 | 1,7 bis 10 | N/15 mm | intern |
| Mindestsiegeltemperatur von Deckschicht A gegen APET-Substrat | 140 | 139 | 138 | °C | intern |
| Siegelnahtfestigkeit von Deckschicht A gegen A/ CPET-Substrat (bei 140 °C) | 1,5 bis 10 | 1,6 bis 10 | 1,7 bis 10 | N/15 mm | intern |
| Weißgrad der Folie nach Berger | > 70 | > 75 | > 80 | | |
| Glanz der Deckschicht A, 20° | > 130 | > 140 | > 150 | | DIN 67530 |

Zur Charakterisierung der Rohstoffe und der Folien wurden im Rahmen der vorliegenden Erfindung die folgenden Messmethoden benutzt:

Messung des mittleren Partikeldurchmessers $d_{50}$

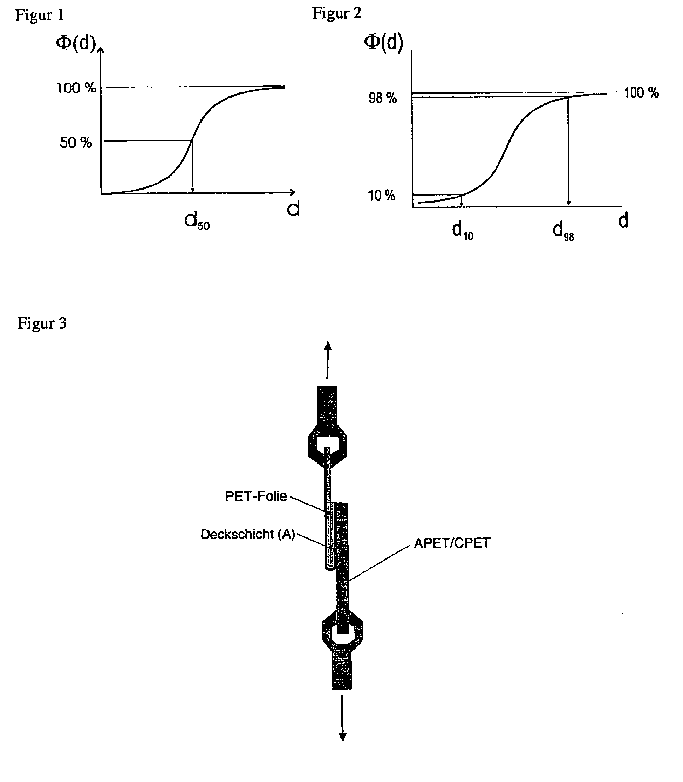

Die Bestimmung des mittleren Partikeldurchmessers $d_{50}$ wird mittels Laser auf einem Master Sizer (Malvem Instruments, GB) nach der Standardmethode durchgeführt (andere Messgeräte sind z. B. Horiba LA 500 (Horiba Ltd., JP) oder Helos (Sympatec GmbH, DE), welche das gleiche Messprinzip verwenden). Die Proben werden dazu in eine Küvette mit Wasser gegeben und diese dann in das Messgerät gestellt. Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 Gew.-%-Ordinatenwertes mit der Summenkurve liefert auf der Abszissenachse den gewünschten $d_{50}$-Wert (vgl. Figur 1).

Messung des SPAN98

Die Bestimmung des SPAN98 wird mit dem gleichen Messgerät durchgeführt wie bei der Bestimmung des mittleren Durchmessers $d_{50}$ beschrieben. Der SPAN98 ist dabei wie folgt definiert:

$$SPAN98 = \frac{d_{98} - d_{10}}{d_{50}}$$

Für die Ermittlung von $d_{98}$ und $d_{10}$ wird wiederum die Summenkurve der Partikelgrößenverteilung zu Grunde gelegt. Der Schnittpunkt des 98 %-Ordinatenwertes mit der Summenkurve liefert auf der Abszissenachse den gewünschten $d_{98}$-Wert und der Schnittpunkt des 10 %-Ordinatenwertes mit der Summenkurve liefert auf der Abszissenachse den gewünschten $d_{10}$-Wert (vgl. Figur 2).

Siegelnahtfestigkeit (gegenüber APET)

Zur Bestimmung der Siegelnahtfestigkeit wird ein Folienstreifen (100 mm lang x 15 mm breit) auf die APET-Seite eines entsprechenden Streifens einer Menüschale gelegt und bei der eingestellten Temperatur von 140 °C, einer Siegelzeit von 0,5 s und einem Siegeldruck von ca. 3 bar (Siegelgerät HSG/ET der Firma Brugger, DE, beidseitig beheizte Siegelbacke) gesiegelt. Entsprechend Figur 3 werden die gesiegelten Streifen in die Zugprüfmaschine (z. B. Universalprüfmaschine TC-FR1.0TH.D09 der Firma Zwick, DE) eingespannt und die 180°-Siegelnahtfestigkeit, d. h. die zur Auftrennung der Prüfstreifen benötigte Kraft, mit einer Abzugsgeschwindigkeit von 200 mm/min und einer Prüftemperatur von 23 °C bestimmt. Die Siegelnahtfestigkeit wird in N pro 15 mm Folienstreifen angegeben (z.B. 2 N/15 mm).

Bestimmung der Mindestsiegeltemperatur (gegenüber APET)

Mit dem Siegelgerät HSG/ET der Firma Brugger werden, wie zuvor bei der Messung der Siegelnahtfestigkeit beschrieben, heißgesiegelte Proben (Siegelnaht 15 mm x 100 mm) hergestellt, wobei die Folie bei unterschiedlichen Temperaturen mit Hilfe zweier beheizter Siegelbacken bei einem Siegeldruck von 3 bar und einer Siegeldauer von 0,5 s gesiegelt wird. Die 180°-Siegelnahtfestigkeit wird wie bei der Bestimmung der Siegelnahtfestigkeit gemessen. Die Mindestsiegeltemperatur ist die Temperatur, bei der eine Siegelnahtfestigkeit von mindestens 0,5 N/15 mm erreicht wird (= Siegelanspringtemperatur).

Siegelnahtfestigkeit gegenüber sich selbst (= FIN-Siegelung)

Zur Bestimmung der Siegelnahtfestigkeit werden zwei 15 mm breite Folienstreifen übereinandergelegt und bei 130 °C, einer Siegelzeit von 0,5 s und einem Siegeldruck von 2 bar (Gerät: Brugger Typ NDS, einseitig beheizte Siegelbacke) versiegelt. Die Siegelnahtfestigkeit wird nach der T-Peel-Methode bestimmt = 2. 90°).

Bestimmung der Mindestsiegeltemperatur gegenüber sich selbst

Mit dem Siegelgerät HSG/ET der Firma Brugger werden heißgesiegelte Proben (Siegelnaht 20 mm x 100 mm) hergestellt, wobei die Folie bei unterschiedlichen Temperaturen mit Hilfe zweier beheizter Siegelbacken bei einem Siegeldruck von 2 bar und einer Siegeldauer von 0,5 s gesiegelt wird. Aus den gesiegelten Proben werden Prüfstreifen von 15 mm Breite geschnitten. Die T-Siegelnahtfestigkeit wird wie bei der Bestimmung der Siegelnahtfestigkeit gemessen. Die Mindestsiegeltemperatur ist die Temperatur, bei der eine Siegelnahtfestigkeit von mindestens 0,5 N/15 mm erreicht wird.

Weißgrad

Der Weißgrad wird nach Berger bestimmt, wobei mehr als 20 Folienlagen aufeinander gelegt werden. Die Bestimmung des Weißgrades erfolgt mit Hilfe des elektrischen Remissionsphotometers ELREPHO der Firma Zeiss, Oberkochem, DE, Normlichtart C, 2°-Normalbeobachter. Der Weißgrad WG wird als

$$WG = RY + 3RZ - 3RX$$

definiert, wobei RX, RY, RZ entsprechende Reflexionsfaktoren bei Einsatz eines X-, Y-, Z-Farbmessfilters sind. Als Weißstandard wird ein Pressling aus Bariumsulfat (DIN 5033, Teil 9) verwendet. Eine ausführliche Beschreibung ist z. B. in Hansl Loos, Farbmessung, Verlag Beruf und Schule, Itzehoe (1989) beschrieben.

Glanz

Der Glanz wird nach DIN 67530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 20° eingestellt.

SV-Wert (Standard Viscosity)

Die Standardviskosität SV (DCE) wird, angelehnt an DIN 53726, bei 25 °C in Dichloressigsäure gemessen. Die intrinsische Viskosität (IV) von Polyethylenterephthalat berechnet sich wie folgt aus der Standardviskosität

$$IV = [\eta] = 6{,}907 \cdot 10^{-4}\ SV\ (DCE) + 0{,}063096\ [dl/g]$$

**Verarbeitungsverhalten der Folie**

Das Verhalten der Folie wurde visuell bei der Herstellung und der Verarbeitung beurteilt.

++++: keine Klebeneigung an Walzen oder anderen mechanischen Teilen; keine Blockprobleme bei der Verarbeitung auf Verpackungsmaschinen; niedrige Herstellkosten

-: Klebeneigung an Walzen oder anderen mechanischen Teilen; Blockprobleme bei der Verarbeitung auf Verpackungsmaschinen; hohe Herstellkosten.

**Wickelverhalten**

Das Blocken der Folie beim Wickeln wurde beurteilt:

++++: keine Blockprobleme beim Wickeln
-: Blockprobleme beim Wickeln

Beispiel 1

Chips aus Polyethylenterephthalat und $TiO_2$-haltigem Polyethylenterephthalat als Weißpigment wurden getrocknet und dem Extruder für die Basisschicht B zugeführt. Ebenfalls wurden Chips aus Polyethylenterephthalat, $TiO_2$-haltigem Polyethylenterephthalat als Weißpigment und $SiO_2$-haltigem Polyethylenterephthalat als Pigment getrocknet und dem Extruder für die nicht siegelfähige Deckschicht C zugeführt.
Daneben wurden Chips aus einem Polyester hergestellt, der aus einem amorphen Copolyester mit 78 Mol-% Ethylenterephthalat und 22 Mol-% Ethylenisophthalat besteht (hergestellt über das Umesterungsverfahren mit Mn als Umesterungskatalysator, Mn-Konzentration: 100 ppm). Der Copolyester wurde auf eine Restfeuchte von unterhalb 200 ppm getrocknet und dem Extruder für die siegelfähige Deckschicht A zugeführt.
Dann wurde durch Koextrusion und anschließende stufenweise Orientierung in Längs- und Querrichtung eine transparente, dreischichtige Folie mit ABC-Aufbau und einer Gesamtdicke von 25 $\mu$m hergestellt. Die Dicke der Deckschichten ist der Tabelle 2 zu entnehmen.

Deckschicht A:

100 Gew.-%    Copolyester mit einem SV-Wert von 800

Basisschicht B:

| | |
|---|---|
| 82 Gew.-% | Polyethylenterephthalat mit einem SV-Wert von 800 |
| 18 Gew.-% | Polyethylenterephthalat-Masterbatch der Fa. Sukano (Schindellegi, CH) mit 50 Gew.-% Titandioxid (mittlerer Teilchendurchmesser Titandioxid $d_{50}$ ca. 0,3 $\mu$m) |

Deckschicht C, Mischung aus:

| | |
|---|---|
| 70 Gew.-% | Polyethylenterephthalat mit einem SV-Wert von 800 |
| 14 Gew.-% | Polyethylenterephthalat-Masterbatch der Fa. Sukano (Schindellegi, CH) mit 50 Gew.-% Titandioxid (mittlerer Teilchendurchmesser Titandioxid ca. 0,3 $\mu$m) |
| 16 Gew.-% | Polyethylenterephthalat-Masterbatch aus 99 Gew.-% Polyethylenterephthalat (SV-Wert von 800) und 1,0 Gew.-% Sylobloc 44 H (synthetisches $SiO_2$ derFa. Grace, Durchmesser $d_{50}$ = 2,5 $\mu$m, SPAN98:1,8 = optionales Pigmentsystem) |

Die Herstellungsbedingungen in den einzelnen Verfahrensschritten waren:

| | | | | |
|---|---|---|---|---|
| Extrusion | Temperaturen | A-Schicht: | 280 | °C |
| | | B-Schicht: | 280 | °C |
| | | C-Schicht: | 280 | °C |
| | Temperatur der Abzugswalze | | 20 | °C |
| Längsstreckung | Aufheiztemperatur | | 70-120 | °C |
| | Strecktemperatur | | 115 | °C |
| | Längsstreckverhältnis | | 4,0 | |
| Querstreckung | Aufheiztemperatur | | 100 | °C |
| | Strecktemperatur | | 125 | °C |
| | Querstreckverhältnis | | 3,9 | |
| Fixierung | Temperatur | | 230 | °C |
| | Dauer | | 3 | s |

Die Folie hatte die geforderten guten Siegeleigenschaften, ließ sich gut wickeln und zeigte das gewünschte Verarbeitungsverhalten.

Beispiel 2

Im Vergleich zu Beispiel 1 wurde die Deckschichtdicke der siegelfähigen Schicht A von 1,5 auf 2,0 $\mu$m bei sonst identischem Folienaufbau und identischer Herstellungsweise angehoben. Die Siegeleigenschaften haben sich hierdurch verbessert, insbesondere ist die Siegelnahtfestigkeit deutlich größer geworden.

Vergleichsbeispiel 1

Im Vergleich zu Beispiel 1 wurde jetzt die siegelfähige Deckschicht A so hoch pigmentiert wie die nicht siegelfähige Deckschicht C. Die Wickelung und die Verarbeitungseigenschaften der Folie hatten sich durch diese Maßnahme marginal verbessert, jedoch waren die Siegeleigenschaften und die Optik der Folie deutlich schlechter geworden.

Vergleichsbeispiel 2

Es wurde Beispiel 1 aus der EP-A-1 186 406 nachgearbeitet. Das Siegelverhalten, die Optik, das Handling und das Verarbeitungsverhalten der Folie waren schlechter als bei den erfindunggemäßen Beispielen.
Die wichtigsten Eigenschaften der so hergestellten Folien sind in den nachfolgenden Tabellen 2 und 3 zusammengefasst.

**Tabelle 2**

| Foliendicke in μm | Folienaufbau | Schichtdicken in μm | | | Pigment in den Schichten | | | mittlerer Pigmentdurchmesser in Schichten μm | | | Pigmentkonzentration in Gew.-% | | | Deck-schicht C |
|---|---|---|---|---|---|---|---|---|---|---|---|---|---|---|
| | | A | B | C | A | B | C | A | B | C | A | B | C | SPAN 98 |
| **Beispiele 1** | 25 | ABC | 1,5 | 22 | 1,5 | kein | Titandioxid | Titandioxid Sylobloc 44H | - | 0,3 | 0,3 2,5 | 0 | 9 | 7 0,16 | 1,8 |
| **Beispiele 2** | 25 | ABC | 2 | 21,5 | 1,5 | kein | Titandioxid | Titandioxid Sylobloc 44H | - | 0,2 | 0,3 2,5 | 0 | 9 | 7 0,16 | 1,8 |
| **Vergleichs-beispiele 1** | 25 | ABC | 1,5 | 22 | 1,5 | Sylobloc 44H | Titandioxid | Titandioxid Sylobloc 44H | 2,5 | 0,3 | 0,3 2,5 | 0,16 | 9 | 7 0,16 | 1,8 |
| **Vergleichs-beispiele 2** | 12 | AB | 9 | 3 | | Titandioxid | Silika | | 0,25 | 1 | | 15 | 0,1 | | - |

**Tabelle 3**

| | Mindestsiegel-temperatur °C | Sieglenahtfestigkeit gegenüber A/C-PET-Menüschalen 140°C 160°C 180°C 200°C N/15mm | | | | Weißgrad % | Glanz A-Seite C-Seite | | Wickelverhalten | Verarbeitungsverhalten |
|---|---|---|---|---|---|---|---|---|---|---|
| **Bei-spiele 1** | 105 | 5,2 | 4,7 | 4,8 | 4,9 | 92 | 190 | 155 | ++++ | ++++ |
| **Bei-spiele 2** | 102 | 5,6 | 5,2 | 5,3 | 5,6 | 91 | 195 | 162 | ++++ | ++++ |
| **Vergleichs-Beispiele 1** | 120 | 2,5 | 3,5 | 4 | 5 | 92 | 130 | 155 | ++++ | ++++ |
| **Vergleichs-Beispiele 2** | 120 | 2 | 2,4 | 3 | 2,9 | 88 | | | - | - |

## Patentansprüche

1. Weiße, mehrschichtige, biaxial orientierte, siegelfähige Polyesterfolie mit einer Basisschicht B, einer siegelfähigen Deckschicht A, welche sich auf einer Oberfläche der Basisschicht B befindet, und einer Deckschicht C, welche sich auf der anderen Oberfläche der Basisschicht B befindet, **dadurch gekennzeichnet, dass**

   a) die Basisschicht B mindestens ein weißfärbendes Pigment in einer Konzentration von 6 bis 20 Gew.-% (bezogen auf die Masse der Basisschicht B) enthält,
   b) die siegelfähige Deckschicht A weniger als 0,03 Gew.-% (bezogen auf die Masse der Deckschicht A) externe Partikel enthält und
   c) die Deckschicht C mindestens ein weißfärbendes Pigment in einer Konzentration von 1 bis 15 Gew.-% (bezogen auf die Masse der Deckschicht C) enthält.

2. Polyesterfolie nach Anspruch 1, **dadurch gekennzeichnet, dass** die Deckschicht C zusätzlich ein Pigment enthält, welches folgende Eigenschaften aufweist:

   a) der mittlere Partikeldurchmesser beträgt 2 bis 5 μm,
   b) die Streuung des Partikeldurchmessers, ausgedrückt durch den SPAN98, beträgt 1,2 bis 2 und
   c) die Konzentration beträgt 0,05 bis 1,5 Gew.-% (bezogen auf die Masse der Deckschicht C).

3. Polyesterfolie nach Anspruch 1 oder 2, **dadurch gekennzeichnet, dass** die Basisschicht B einen thermoplastischen Polyester enthält.

4. Polyesterfolie nach einem oder mehreren der Ansprüche 1 bis 3, **dadurch gekennzeichnet, dass** der Polyester der Basisschicht B mindestens 90 Mol-% Ethylenglykol- und Terephthalsäure-Einheiten oder Ethylenglykol- und Naphthalin- 2,6-dicarbonsäure-Einheiten enthält.

5. Polyesterfolie nach einem oder mehreren der Ansprüche 1 bis 4, **dadurch gekennzeichnet, dass** als Polyester der Basisschicht B Polyethylenterephthalat verwendet wird.

6. Polyesterfolie nach einem oder mehreren der Ansprüche 1 bis 5, **dadurch gekennzeichnet, dass** die siegelfähige Deckschicht A einen Copolyester enthält, der aus Ethylenterephthalat- und Ethylenisophthalat-Einheiten aufgebaut ist.

7. Polyesterfolie nach einem oder mehreren der Ansprüche 1 bis 6, **dadurch gekennzeichnet, dass** der Copolyester der siegelfähigen Deckschicht A 60 bis 95 Mol-% Ethylenterephthalat- und 40 bis 5 Mol-% Ethylenisophthalat-Einheiten aufweist.

8. Polyesterfolie nach einem oder mehreren der Ansprüche 1 bis 7, **dadurch gekennzeichnet, dass** die Deckschicht A keine zugesetzten Partikel enthält.

9. Polyesterfolie nach einem oder mehreren der Ansprüche 1 bis 8, **dadurch gekennzeichnet, dass** die Basisschicht und/oder die Deckschicht C als weißfärbendes Pigment Titandioxid enthalten.

10. Polyesterfolie nach einem oder mehreren der Ansprüche 1 bis 9, **dadurch gekennzeichnet, dass** die Basisschicht und/oder die Deckschicht C als weißfärbendes Pigment Titandioxid in der Rutil-Modifikation enthalten.

11. Polyesterfolie nach einem oder mehreren der Ansprüche 1 bis 10, **dadurch gekennzeichnet, dass** das Pigment der Deckschicht C $SiO_2$ ist.

12. Polyesterfolie nach einem oder mehreren der Ansprüche 1 bis 11, **dadurch gekennzeichnet, dass** die Deckschicht A eine Dicke von 1 bis 4 μm aufweist.

13. Polyesterfolie nach einem oder mehreren der Ansprüche 1 bis 12, **dadurch gekennzeichnet, dass** die Deckschicht A einen Glanz von größer als 130 aufweist (gemessen bei 20°).

14. Polyesterfolie nach einem oder mehreren der Ansprüche 1 bis 13, **dadurch gekennzeichnet, dass** die Mindestsiegeltemperatur der Deckschicht A gegen ein APET-Substrat 110 °C oder weniger beträgt.

15. Polyesterfolie nach einem oder mehreren der Ansprüche 1 bis 14, **dadurch gekennzeichnet, dass** die Folie einen Weißgrad nach Berger von größer als 70 % aufweist.

16. Verfahren zur Herstellung einer Polyesterfolie nach einem oder mehreren der Ansprüche 1 bis 15 umfassend die Schritte:

   a) Herstellen einer mehrschichtigen Folie durch Coextrusion,
   b) biaxiales Strecken der Folie und
   c) Thermofixieren der gestreckten Folie,

wobei das Polymere für die Basisschicht B mindestens ein weißfärbendes Pigment in einer Konzentration von 6 bis 20 Gew.-% (bezogen auf die Masse der Basisschicht B) enthält, das Polymere für die siegelfähige Deckschicht A weniger als 0,03 Gew.-% (bezogen auf die Masse der Deckschicht A) Partikel enthält und das Polymere für die Deckschicht C mindestens ein weißfärbendes Pigment in einer Konzentration von 1 bis 15 Gew.-% (bezogen auf die Masse der Deckschicht C) enthält.

17. Verwendung einer Polyesterfolie nach einem oder mehreren der Ansprüche 1 bis 15 als Deckelfolie für Schalen, als Beutel oder als Deckschicht auf Blechen.

**Claims**

1. A white, multilayer, biaxially oriented, sealable polyester film with a base layer B, with a sealable outer layer A located on one surface of the base layer B, and with an outer layer C located on the other surface of the base layer B, wherein

    a) the base layer B comprises at least one white-coloring pigment at a concentration of from 6 to 20 % by weight (based on the weight of the base layer B),
    b) the sealable outer layer A comprises less than 0.03 % by weight (based on the weight of the outer layer A) of external particles, and
    c) the outer layer C comprises at least one white-coloring pigment at a concentration of from 1 to 15 % by weight (based on the weight of the outer layer C).

2. The polyester film as claimed in claim 1, wherein the outer layer C also comprises a pigment which has the following properties:

    a) the average particle diameter is from 2 to 5 $\mu$m,
    b) the scatter of the particle diameter, expressed via the SPAN98, is from 1.2 to 2, and
    c) the concentration is from 0.05 to 1.5 % by weight (based on the weight of the outer layer C).

3. The polyester film as claimed in claim 1 or 2, wherein the base layer B comprises a thermoplastic polyester.

4. The polyester film as claimed in one or more of claims 1 to 3, wherein the polyester of the base layer B contains at least 90 mol% of units of ethylene glycol and of terephthalic acid or of ethylene glycol and of naphthalene-2,6-dicarboxylic acid.

5. The polyester film as claimed in one or more of claims 1 to 4, wherein polyethylene terephthalate is used as polyester of the base layer B.

6. The polyester film as claimed in one or more of claims 1 to 5, wherein the sealable outer layer A comprises a copolyester composed of ethylene terephthalate units and of ethylene isophthalate units.

7. The polyester film as claimed in one or more of claims 1 to 6, wherein the copolyester of the sealable outer layer A has from 60 to 95 mol% of ethylene terephthalate units and from 40 to 5 mol% of ethylene isophthalate units.

8. The polyester film as claimed in one or more of claims 1 to 7, wherein the outer layer A comprises no added particles.

9. The polyester film as claimed in one or more of claims 1 to 8, wherein the base layer and/or the outer layer C comprise titanium dioxide as white-coloring pigment.

10. The polyester film as claimed in one or more of claims 1 to 9, wherein the base layer and/or the outer layer C comprise the rutile form of titanium dioxide as white-coloring pigment.

11. The polyester film as claimed in one or more of claims 1 to 10, wherein the pigment of the outer layer C is $SiO_2$.

12. The polyester film as claimed in one or more of claims 1 to 11, wherein the thickness of the outer layer A is from 1 to 4 $\mu$m.

13. The polyester film as claimed in one or more of claims 1 to 12, wherein the gloss of the outer layer A is greater than 130 (measured at 20 °).

14. The polyester film as claimed in one or more of claims 1 to 13, wherein the minimum sealing temperature of the outer layer A with respect to an APET substrate is 110 °C or below.

15. The polyester film as claimed in one or more of claims 1 to 14, wherein the Berger whiteness of the film is greater than 70 %.

16. A process for production of a polyester film as claimed in one or more of claims 1 to 15, comprising the steps of

a) producing a multilayer film via coextrusion,
b) biaxial stretching of the film, and
c) heat-setting of the stretched film,

where the polymer for the base layer B comprises at least one white-coloring pigment at a concentration of from 6 to 20 % by weight (based on the weight of the base layer B), the polymer for the sealable outer layer A comprises less than 0.03 % by weight (based on the weight of the outer layer A) of particles, and the polymer for the outer layer C comprises at least one white-coloring pigment at a concentration of from 1 to 15 % by weight (based on the weight of the outer layer C).

17. The use of a polyester film as claimed in one or more of claims 1 to 15 as lid film for trays, as a bag, or as an outer layer on sheet metal.

**Revendications**

1. Film de polyester blanc, multicouche, orienté bi-axialement, pouvant être scellé, avec une couche de base B, une couche de couverture pouvant être scellée A, laquelle se trouve sur une surface de la couche de base B, et une couche de couverture C, laquelle se trouve sur l'autre surface de la couche de base B, **caractérisé en ce que**

a) la couche de base B contient au moins un pigment qui colore en blanc à une concentration de 6 à 20 % en poids (rapportée à la masse de la couche de base B),
b) la couche de couverture pouvant être scellée A contient moins de 0,03 % en poids (rapporté à la masse de la couche de couverture A) de particules externes et
c) la couche de couverture C contient au moins un pigment qui colore en blanc, à une concentration de 1 à 15 % en poids (rapportée à la masse de la couche de couverture C).

2. Film de polyester selon la revendication 1, **caractérisé en ce que** la couche de couverture C contient en plus un pigment qui présente les propriétés suivantes :

a) le diamètre moyen des particules est de 2 à 5 $\mu$m,
b) l'écart type du diamètre des particules, exprimé par le SPAN98, est de 1,2 à 2 et
c) la concentration est de 0,05 à 1,5 % en poids (rapportée à la masse de la couche de couverture C).

3. Film de polyester selon la revendication 1 ou 2, **caractérisé en ce que** la couche de base B contient un polyester thermoplastique.

4. Film de polyester selon l'une ou plusieurs des revendications 1 à 3, **caractérisé en ce que** le polyester de la couche de base B contient au moins 90 % en moles d'unités d'éthylène glycol et d'acide téréphtalique ou d'unités d'éthylène glycol et d'acide naphtalène-2,6-dicarboxylique.

5. Film de polyester selon l'une ou plusieurs des revendications 1 à 4, **caractérisé en ce que** du poly(téréphtalate d'éthylène) est utilisé comme polyester de la couche de base B.

6. Film de polyester selon l'une ou plusieurs des revendications 1 à 5, **caractérisé en ce que** la couche de couverture pouvant être scellée A contient un copolyester qui est construit à partir d'unités de téréphtalate d'éthylène et d'isophtalate d'éthylène.

7. Film de polyester selon l'une ou plusieurs des revendications 1 à 6, **caractérisé en ce que** le copolyester de la couche de couverture pouvant être scellée A comporte 60 à 95 % en moles d'unités de téréphtalate d'éthylène et 40 à 5 % en mole d'unités d'isophtalate d'éthylène.

8. Film de polyester selon l'une ou plusieurs des revendications 1 à 7, **caractérisé en ce que** la couche de couverture A ne contient pas de particules additionnelles.

9. Film de polyester selon l'une ou plusieurs des revendications 1 à 8, **caractérisé en ce que** la couche de base et/ou la couche de couverture C contiennent comme pigment, qui colore en blanc, de l'oxyde de titane.

**10.** Film de polyester selon l'une ou plusieurs des revendications 1 à 9, **caractérisé en ce que** la couche de base et/ou la couche de couverture C contiennent comme pigment, qui colore en blanc, de l'oxyde de titane dans la modification rutile.

**11.** Film de polyester selon l'une ou plusieurs des revendications 1 à 10, **caractérisé en ce que** le pigment de la couche de couverture C est $SiO_2$.

**12.** Film de polyester selon l'une ou plusieurs des revendications 1 à 11, **caractérisé en ce que** la couche de couverture A présente une épaisseur de 1 à 4 $\mu$m.

**13.** Film de polyester selon l'une ou plusieurs des revendications 1 à 12, **caractérisé en ce que** la couche de couverture A présente une brillance supérieure à 130 (mesurée à 20°).

**14.** Film de polyester selon l'une ou plusieurs des revendications 1 à 13, **caractérisé en ce que** la température de scellement minimale de la couche de couverture A sur un substrat en APET est de 110 °C ou moins.

**15.** Film de polyester selon l'une ou plusieurs des revendications 1 à 14, **caractérisé en ce que** le film présente un degré de blancheur selon Berger de plus de 70 %.

**16.** Procédé de fabrication d'un film de polyester selon l'une ou plusieurs des revendications 1 à 15, comprenant les étapes :

a) fabrication d'un film multicouche par coextrusion,
b) étirement biaxial du film et
c) thermofixation du film étiré,

sachant que le polymère pour la couche de base B contient au moins un pigment qui colore en blanc à une concentration de 6 à 20 % en poids (rapportée à la masse de la couche de base B), que le polymère pour la couche de couverture pouvant être scellée A contient moins de 0,03 % en poids (rapporté à la masse de la couche de couverture A) de particules et que le polymère pour la couche de couverture C contient au moins un pigment qui colore en blanc à une concentration de 1 à 15 % en poids (rapportée à la masse de la couche de couverture C).

**17.** Utilisation d'un film de polyester selon l'une ou plusieurs des revendications 1 à 15 comme film de couverture pour des cuvettes, comme sachet ou comme couche de couverture sur des tôles.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6720065 B
- EP 0862514 B
- EP 0515096 A
- EP 1186406 A
- EP 1471096 A
- EP 1471097 A
- EP 1475228 A
- EP 1475229 A
- EP 1471094 A
- EP 1471098 A

**In der Beschreibung aufgeführte Nicht-Patentliteratur**

- **Hansl Loos.** Farbmessung. Verlag, 1989